(19) Europäisches Patentamt
European Patent Office
Office européen des brevets

(11) **EP 0 763 715 B1**

(12) **EUROPÄISCHE PATENTSCHRIFT**

(45) Veröffentlichungstag und Bekanntmachung des Hinweises auf die Patenterteilung:
**23.01.2002 Patentblatt 2002/04**

(51) Int Cl.⁷: $G01D\ 5/38$, $G01D\ 5/36$

(21) Anmeldenummer: **96111723.1**

(22) Anmeldetag: **20.07.1996**

(54) **Vorrichtung zur Filterung von Oberwellen-Signalanteilen**

Device to filter overtones from signals

Dispositif pour filtrer des harmoniques de signaux

(84) Benannte Vertragsstaaten:
**AT CH DE FR GB IT LI**

(30) Priorität: **01.09.1995 DE 19532246**

(43) Veröffentlichungstag der Anmeldung:
**19.03.1997 Patentblatt 1997/12**

(73) Patentinhaber: **Dr. Johannes Heidenhain GmbH
83292 Traunreut (DE)**

(72) Erfinder: **Holzapfel, Wolfgang, Dr.
83119 Obing (DE)**

(56) Entgegenhaltungen:
EP-A- 0 541 828          EP-A- 0 645 607
US-A- 4 618 214          US-A- 5 068 530
US-A- 5 332 896

## Beschreibung

Die vorliegende Erfindung betrifft eine Vorrichtung zur Filterung von Oberwellen-Signalanteilen, wie sie etwa in einer Positionsmeßeinrichtung zur Bestimmung von Lageänderungen zweier relativ zueinander beweglicher Objekte eingesetzt werden kann. Insbesondere geeignet ist die erfindungsgemäße Vorrichtung zur Verwendung innerhalb eines interferentiellen Meßsystems.

In bekannten Positionsmeßeinrichtungen werden verschiedenste physikalische Prinzipien zur Signalgewinnung eingesetzt. So unterscheidet man zwischen photoelektrischen bzw. optischen, magnetischen, induktiven und kapazitiven Abtastprinzipien. Sämtlichen Verfahren ist jedoch gemeinsam, daß eine periodische Maßstabteilung mit Hilfe einer Abtastteilung abgetastet und das resultierende Abtastsignal als Meßsignal ausgewertet wird.

Die Periodizität der Abtastsignale wird hierbei durch die Teilungsperiode bzw. das Inkrement der Maßstabteilung des eingesetzten Teilungsträgers bestimmt. Bei optischen Meßeinrichtungen ist dieses Inkrement z.B. durch die Breiten der lichtdurchlässigen und lichtundurchlässigen Stege einer als Amplitudengitter ausgeführten Maßstabteilung vorgegeben.

Werden die Abtastteilung und die Maßstabteilung relativ zueinander bewegt, so wird von jedem abgetasteten Inkrement ein Zählimpuls abgeleitet, die einzelnen Impulse vorzeichenrichtig aufsummiert und die Summe als Meßwert zur Gewinnung der Längen- oder Winkelinformation weiterverarbeitet.

Die Maßstabteilungen der eingesetzten Teilungsträger, d.h. beispielsweise die entsprechenden Steg-Lücke-Verhältnisse eines Amplitudengitters, weichen nunmehr im allgemeinen vom idealen Teilungsverhältnis-Verlauf ab. Ferner ergeben sich Kantenunschärfen bei den Maßstab-Teilungsstegen aufgrund von Fertigungstoleranzen.

Infolge derartiger Ungenauigkeiten weisen die gewonnenen periodischen Ausgangssignale daher im allgemeinen nicht den gewünschten idealen Verlauf auf, beispielsweise rein sinusförmig, sondern sind üblicherweise mit Oberwellen bzw. harmonischen Oberschwingungen behaftet. Zur hochexakten Positionsbestimmung ist es jedoch erforderlich, daß die aus der Maßstabteilung gewonnenen Abtastsignale möglichst oberwellenfrei vorliegen.

Zur Oberwellenfilterung innerhalb bekannter Positionsmeßeinrichtungen existieren nunmehr eine Reihe von Möglichkeiten. Stellvertretend hierfür sei etwa auf die DE 34 12 128 C1 verwiesen, wo ein Filterungsverfahren vorgeschlagen wird, das auch als sogenannte arcsin-Abtastung bekannt ist. Dieses Filterprinzip basiert auf einer besonderen Abtastteilung, bei der die Stegpositionen im Abtastgitter gegenüber den regulären, äquidistanten Nominallagen um einen kleinen Betrag d verschoben sind. Aufgrund der definierten Stegverschiebungen ergeben sich lokale Phasenverschiebungen der zugehörigen Signalanteile, was zu einer Auslöschung der ungeraden Oberwellenanteile führt. Insgesamt resultiert hierbei eine Phasenverschiebung sowohl der Grundwelle als auch der vorhandenen Oberwellen-Signalanteile.

Grundsätzlich ähnliche Ansätze zur Oberwellen-Filterung sind ferner aus der EP 0 541 827 B1 bekannt, wo ebenfalls eine definierte Phasenverschiebung von Grund- und Oberwellen über einen geeignet gewählten Versatz der Stege der Abtastteilungen bewirkt wird.

Die vorgeschlagenen Vorrichtungen bzw. Verfahren zur Filterung von Oberwellen-Signalanteilen weisen jedoch allesamt bestimmte Nachteile auf. So ergibt sich aufgrund der vom Abtastort abhängigen Phasenverschiebung der interferierenden Teilstrahlenbündel jeweils eine Reduzierung des Modulationsgrades des resultierenden Gesamtsignals. Dies wiederum wirkt sich negativ auf die weitere Signalverarbeitung aus. Je nach gewähltem Filter-Verfahren variiert dabei die Reduktion des Modulationsgrades. Beispielsweise ergibt sich bei der Filterung aller Oberwellen mit Hilfe der als Vernier-arcsin-Filterung bekannten Methode gemäß der EP 0 541 827 B1 ein Reduktionsfaktor von 0,5; bei der Arcsin-Filterung der ungeraden Oberwellen gemäß der DE 34 12 128 C1 resultiert ein Reduktionsfaktor von 0,785. Der Reduktionsfaktor sei hierbei als Verhältnis des Signal-Modulationsgrades mit Oberwellen-Filterung zum Modulationsgrad ohne -Fi-lterung definiert.

Bei sogenannten interferentiellen Positionsmeßeinrichtungen, wie sie z.B. aus der EP 0 163 362 B1 bekannt sind, trägt nunmehr insbesondere die Amplitude der zweiten Oberwelle zur störenden Signalverfälschung bei, während die restlichen Oberwellenanteile relativ dazu vernachlässigbar sind. Auch hierbei sind die von einer idealen Verteilung abweichenden Steg- und Lückenbreiten entlang der verwendeten Maßstabteilung die Ursache für die Entstehung unerwünschter Oberwellen-Signalanteile.

Aufgabe der vorliegenden Erfindung ist es daher, eine Vorrichtung zur Filterung von Oberwellen-Signalanteilen insbesondere für interferentiell arbeitende Positionsmeßeinrichtungen zu schaffen, bei der eine definierte Unterdrückung bestimmter Oberwellen-Signalanteile möglich ist. Gefordert ist hierbei, daß der Modulationsgrad der Grundwelle von der Filterung möglichst nicht reduziert wird.

Diese Aufgabe wird gelöst durch eine Vorrichtung mit den Merkmalen des Anspruches 1. Vorteilhafte Ausführungsformen der erfindungsgemäßen Vorrichtung ergeben sich aus den Merkmalen der abhängigen Ansprüche.

Erfindungsgemäß werden nunmehr lediglich die gewünschten geradzahligen Oberwellen-Anteile definiert aus dem Gesamt-Abtastsignal eliminiert. Hierbei bleibt die Grundwelle unverändert, das heißt es resultiert für den Modulationsgrad der Grundwelle ein Reduktionsfaktor von 1 bzw. nahe 1 und damit das gewünschte, von geradzahligen Oberwellen-Anteilen unverfälschte Abtastsignal.

Je nach Ausführung der interferentiellen Positions-Meßeinrichtung als Drei-oder Mehrgittergeber kann durch eine entsprechende Übertragung der erfindungsgemäßen Prinzipien der gewünschte geradzahlige Oberwellen-Signalanteil ausgefiltert werden. Im nachfolgend beschriebenen Ausführungsbeispiel wird die zweite Oberwelle gefiltert.

Die erfindungsgemäße Vorrichtung kann innerhalb einer interferentiellen Positionsmeßeinrichtung sowohl als Durchlicht- als auch als Auflicht-Variante eingesetzt werden.

Ferner läßt sich die erfindungsgemäße Vorrichtung prinzipiell sowohl mit Phasengittern als auch mit Amplitudengittern als Abtast- bzw. Maßstabteilung realisieren.

Weitere Vorteile sowie Einzelheiten der erfindungsgemäßen Vorrichtung ergeben sich aus der nachfolgenden Beschreibung von Ausführungsbeispielen anhand der beiliegenden Figuren.

Hierbei zeigt

Figur 1      den grundsätzlichen Aufbau einer möglichen Ausführungsform einer interferentiellen Positionsmeßeinrichtung, in der die erfindungsgemäße Vorrichtung integriert ist;

Figur 2      den entfalteten Strahlengang der Positionsmeßeinrichtung aus Figur 1 zur Erläuterung des Erfindungsprinzips;

Figur 3a     eine erste mögliche Ausführungsform der Abtastteilung der erfindungsgemäßen Vorrichtung;

Figur 3b     eine zweite mögliche Ausführungsform der Abtastteilung der erfindungsgemäßen Vorrichtung.

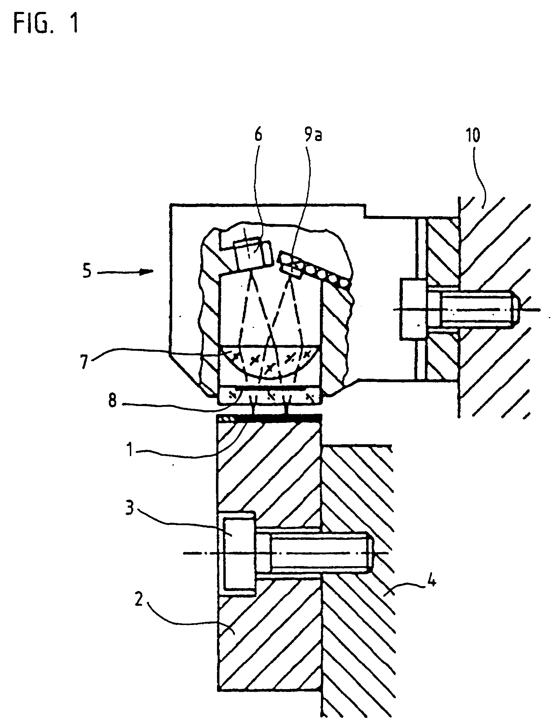

Figur 1 zeigt den grundsätzlichen Aufbau einer interferentiellen Positions-meßeinrichtung, in der die erfindungsgemäße Vorrichtung integriert ist. Die dargestellte Ausführungsform der Positionsmeßeinrichtung ist hierbei als Auflicht-Anordnung eines Längen-Meßsystems ausgeführt. Alternativ hierzu ist es selbstverständlich möglich, die erfindungsgemäße Vorrichtung auch in einer Positionsmeßeinrichtung einzusetzen, die als Winkel-Meßsystem ausgeführt ist und/oder im Durchlicht betrieben wird.

Die dargestellte Positionsmeßeinrichtung des Ausführungsbeispieles in Figur 1 umfaßt einen Maßstab (1), bestehend aus einem Stahlkörper, welcher an seiner Oberfläche eine Maßstabteilung in Form eines Reflexions-Phasengitters trägt. Das verwendete Phasengitter hat eine Teilungsperiode von 4mm und besteht aus 2mm breiten, rechteckförmigen, etwa 0,2mm hohen Stufen aus Gold. Diese Stufen sind im Abstand der Teilungsperiode von 4mm auf der goldbeschichteten und damit ebenfalls reflektierenden Oberfläche des Stahlkörpers des Maßstabs (1) aufgebracht. Der Maßstab (1) ist auf einem Trägerteil (2) angeordnet, welches über eine lösbare Verbindung in Form einer Schraube (3) und einem passendem Gewinde mit einem Teil (4) einer Bearbeitungsmaschine verbunden ist.

Der Maßstab (1) wird von einer linear, das heißt senkrecht zur Zeichenebene, verschiebbaren Abtasteinheit (5) abgetastet. Innerhalb der Abtasteinheit (5) ist eine Lichtquelle (6) vorgesehen, ausgeführt als LED, der eine Kondensoroptik (7) vorgeordnet ist. Dem Maßstab (1) zugewandt folgt innerhalb der Abtasteinheit (5) die Abtastteilung (8). Die Abtastteilung (8) ist im dargestellten Ausführungsbeispiel als Durchlicht-Phasengitter gewählt. Detektorseitig sind ferner drei Detektorelemente (9a) zum Erfassen der reflektierten Strahlungsanteile angeordnet, von denen in der Darstellung der Figur 1 lediglich eines sichtbar ist. Als geeignete Detektorelemente (9a) sind Photoelemente vorgesehen.

Über eine Schraubverbindung ist die Abtasteinheit (5) mit einem nur teilweise dargestellten Schlitten (10) verbunden, der zum definierten Linearversatz der Abtasteinheit (5) entlang des Maßstabes (1) dient.

Die von der Lichtquelle (6) über die Kondensoroptik (7) erzeugte ebene Beleuchtungswelle wird beim Durchtritt durch das Phasengitter der Abtastteilung (8) nunmehr in hauptsächlich drei unterschiedliche Richtungen gebeugt. Am Reflexions-Phasengitter der Maßstabteilung (1) erfolgt eine erneute Beugung sowie eine Reflexion der gebeugten Teilstrahlenbündel. Die reflektierten Teilstrahlenbündel treten erneut durch das Phasengitter der Abtastteilung (8) und werden dabei ein weiteres Mal gebeugt. In der Brennebene der nunmehr als Kollimator-Optik fungierenden Linse (7) werden die interferierenden Teilstrahlenbündel von den dort angeordneten Detektorelementen (9a) in Signalströme umgesetzt. Den Detektorelementen (9a) nachgeordnet ist eine - nicht dargestellte - an sich bekannte Verarbeitungs-Elektronik, die die bei einer Relativverschiebung von Maßstab- (1) und Abtastteilung (7) resultierenden Signale interpoliert und die abgetasteten Inkremente der Maßstabteilung (1) geeignet aufsummiert.

Alternativ zur Ausführung der Abtast- und Maßstabteilungen als Phasengitter kommt prinzipiell auch eine Ausführung als bekannte Amplitudengitter in Betracht.

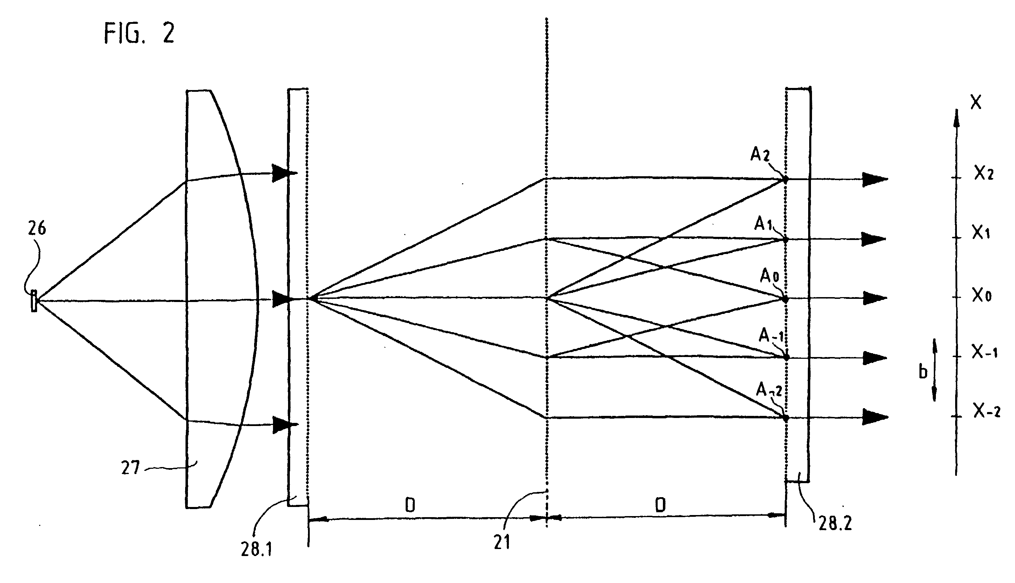

Zur weiteren Erläuterung des Erfindungsprinzips innerhalb der erfindungsgemäßen Vorrichtung sei nunmehr auf die Figur 2 verwiesen, die den entfalteten Strahlengang der Positionsmeßeinrichtung aus Figur 1 bzw. einen funktional äquivalenten Durchlicht-Strahlengang zeigt.

Dargestellt ist hierbei ausgehend von der Lichtquelle (26) in Strahlausbreitungsrichtung die Kondensor-Optik (27), eine erste Abtastteilung (28.1), der Maßstab (21) sowie eine zweite Abtastteilung (28.2). Sowohl der Maßstab (21) als auch die beiden Abtastteilungen (28.1, 28.2) sind wie vorab erwähnt als Phasengitter ausgeführt.

Am Phasengitter der ersten Abtastteilung (28.1) erfolgt zunächst eine Beugung der auftreffenden Teilstrahlenbündels der einfallenden ebenen Welle in mehrere Richtungen. Aus Gründen der Übersichtlichkeit wird hierbei im folgenden lediglich der Strahlverlauf des mittleren Teilstrahlenbündels der auftreffenden ebenen Welle dargestellt.

Am Phasengitter der Maßstabteilung (21) wird der auftreffende Anteil einfallender Teilstrahlenbündel wiederum in verschiedene Richtungen gebeugt. In der Darstellung der Figur 1 ist nunmehr ab dem Maßstab (21) lediglich noch der weitere Verlauf derjenigen Paare von Teilstrahlenbündeln eingezeichnet, deren Strahlengang zwischen der ersten und der zweiten Abtastteilung (28.1, 28.2) ein Parallelogramm bildet und die demzufolge nach der zweiten Abtastteilung (28.2) aufgrund der gleichen zurückgelegten optischen Weglängen interferenzfähig sind.

Die Auftrefforte $A_m$ (m=0, $\pm 1$, $\pm 2$,...) der interferenzfähigen Teilstrahlenbündel auf der zweiten Abtastteilung (28.2) bilden dort ein nahezu äquidistantes Raster, welches sich in Abtastrichtung x erstreckt. Die Abstände $X_m$ zwischen dem Auftreffort $A_0$ des unverschobenen Teilstrahls und den Auftrefforten $A_m$ der verschobenen Teilstrahlenbündel sind näherungsweise gegeben durch:

$$X_m = m * b \tag{1}$$

Der Rasterabstand b beträgt dabei näherungsweise:

$$b \approx D * \lambda/d \tag{2}$$

Mit D sei hierbei der Abstand der Abtastteilungen (28.1, 28.2) vom Maßstab (21), mit $\lambda$ die Wellenlänge der Lichtquelle (26) und mit d die Teilungsperiode des Maßstabes (21) bezeichnet.

Bei typischen Werten von D=1mm, $\lambda$=860nm und d=4mm ergibt sich ein Rasterabstand b bzw. eine Rasterperiode b=215nm

Für die vorliegende Erfindung wird nunmehr die Erkenntnis ausgenutzt, daß die Auftrefforte $A_m$ der Paare von Teilstrahlenbündeln, die die Grundwelle des Signals sowie sämtliche ungeraden Oberwellen erzeugen, einen ungeraden Index m aufweisen. Entsprechend sind den geradzahligen Oberwellen die Auftrefforte der entsprechenden Teilstrahlenbündel mit einem geradzahligen Index m zugeordnet, d.h. m=2, 4, 6... .

Zum gewünschten Filtern der zweiten Oberwelle (m=2) werden erfindungsgemäß die interferierenden Teilstrahlenbündel der zweiten Oberwelle derart definiert phasenverschoben, daß eine komplette Auslöschung dieser Signalanteile erfolgt. Da die Auftrefforte der Teilstrahlenbündel, die die zweite Oberwelle erzeugen, von den Auftrefforten der Teilstrahlenbündel räumlich getrennt sind, die die Grundwelle erzeugen, kann durch eine geeignete Wahl des Versatzes der Teilungsmarkierungen bzw. der Abtast-Teilungsperiode ein definiertes Auslöschen der unerwünschten geraden, inbesondere der zweiten Oberwelle erfolgen.

Der für eine derartige Phasenverschiebung der zweiten Oberwelle erforderliche, definierte Versatz $\delta 1(x)$ bzw. $\delta 2(x)$ der Teilungsmarkierungen der beiden Abtastteilungen (28.1, 28.2) gegenüber äquidistanten Abstandsintervallen ist demzufolge jeweils eine periodische Funktion mit der Periode 2b, das heißt es gilt

$$\delta 1(x) = \delta 1(x+2*b) \tag{3.1},$$

sowie

$$\delta 2(x) = \delta 2(x+2*b) \tag{3.2}.$$

Diese beiden Bedingungen ergeben sich, da wie oben erläutert die Grundwelle an den beiden Auftrefforten $A_1$ bzw. $A_{-1}$ auf der zweiten Abtastteilung (28.2) auftrifft. An diesen beiden Auftrefforten dürfen die beiden Grundwellen-Teilstrahlenbündel keine gegenseitige Phasenverschiebung erleiden bzw. müssen diese zumindest die gleiche Phasenverschiebung erleiden, um den Modulationsgrad der Grundwelle nicht zu reduzieren. Für die zweite Abtastteilung (28.2) ergibt sich aufgrund dieser Überlegungen die in Gleichung (3.2) aufgeführte Periodizitätsbedingung für den Versatz der Teilungsmarkierungen. Analoges gilt für die Periodizitätsbedingung in Gleichung (3.1), die die Eintrittsorte auf der ersten Abtastteilung (28.1) betrifft.

Die Bedingungen für den erforderlichen Versatzverlauf innerhalb der zwei Abtastteilungen (28.1, 28.2) sind in die folgende Bedingung (3') abzuwandeln, wenn in einer Auflichtanordnung lediglich eine einzige Abtastteilung vorgesehen ist, die zweimal durchlaufen wird, wie etwa anhand von Figur 1 erläutert wurde:

$$\delta(x)=\delta(x+2*b) \tag{3'}$$

Gleichzeitig ist zu beachten, daß der jeweilige Versatz der Teilungsmarkierungen so gewählt ist, daß sich die Phasenverschiebungen, die die Grundwellen-Teilstrahlenbündel an den beiden Abtastteilungen (28.1, 28.2) bzw. an einer zweimal durchlaufenen Abtastteilung erfahren, möglichst gegenseitig kompensieren und derart eine stets konstante, vom Abtastort unabhängige Phasenverschiebung aufweisen. Hierfür muß dann hinsichtlich des Versatzes der Teilungsmarkierungen gelten:

$$\delta 1(x)=-\delta 2(x+b) \tag{4}$$

Für den Auflicht-Fall mit zweimal durchlaufener Abtastteilung bedeutet dies analog:

$$\delta(x)=-\delta(x+b) \tag{4'}$$

Für die Grundwellenanteile des resultierenden Signals bleibt somit der Modulationsgrad in der gewünschten Weise unverändert, d.h. es ergibt sich ein Reduktionsfaktor 1 bzw. nahe 1.

Aufgrund des gewählten periodischen Versatzes der Teilungsmarkierungen erfahren die interferierenden Teilstrahlenbündel der zweiten Oberwelle hingegen eine ortsabhängige, gegenseitige Phasenverschiebung, die wiederum zu einer entsprechenden Phasenverschiebung $2*2*\pi*(\delta 1(x) + \delta 2(x))$ des zugehörigen Signalanteiles führt.

Als Bedingung für die Auslöschung der n-ten Oberwelle (z.B. n=2) aufgrund der Mittelung über den Abtastort x läßt sich hinsichtlich des erforderlichen Versatzes $\delta 1(x)$ bzw. $\delta 2(x)$ im Fall zweier durchlaufener Abtastteilungen angeben:

$$\int_{-b}^{+b} e^{i*2n*\pi*(\delta 1(x) + \delta 2(x))/d}\, dx = 0 \tag{5}$$

Im Fall lediglich einer einzigen Abtastteilung, die in einer Auflicht-Anordnung zweimal durchlaufen wird, d.h. $\delta(x):=\delta 1(x)=\delta 2(x)$, ist diese Bedingung für die n-te Oberwelle (z.B. n=2) folgendermaßen abzuwandeln:

$$\int_{-b}^{+b} e^{i*4n*\pi*\delta(x)/d}\, dx = 0 \tag{5'}$$

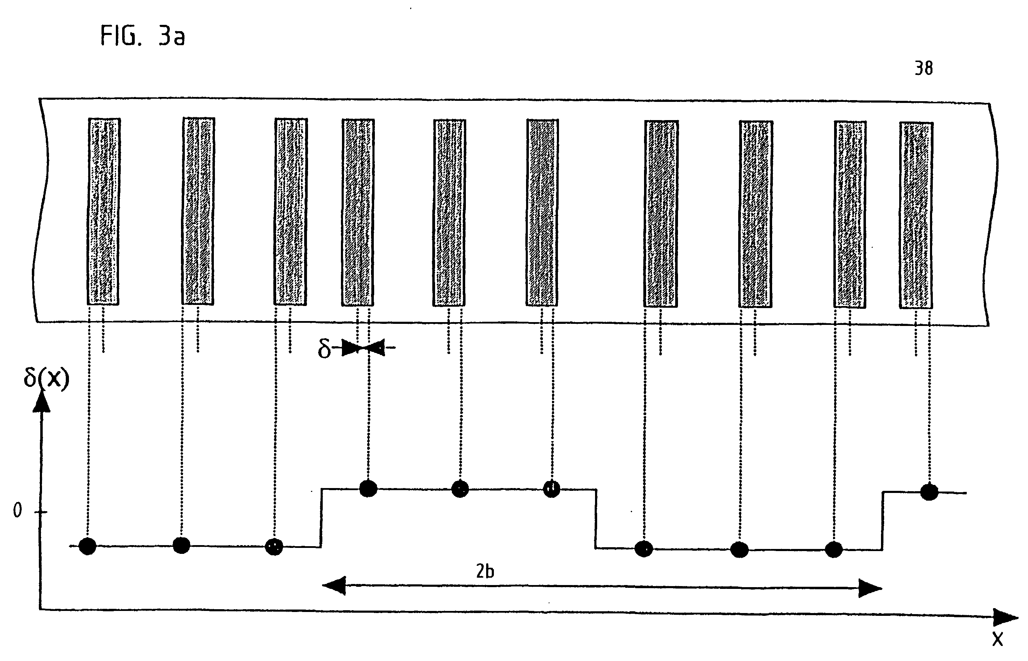

Im nachfolgend angegebenen Ausführungsbeispiel sei von einer Auflicht-Anordnung ausgegangen, bei der eine einzige Abtastteilung zweimal durchlaufen wird, d.h. zwei identische Abtastteilungen vorliegen. Eine Funktion $\delta(x)$ für den entsprechenden Versatz, die die genannten Bedingungen erfüllt, ist im unteren Teil der Figur 3a dargestellt. Hierbei ist ein Versatzverlauf

$$\delta(x) = \begin{cases} + \text{d/16 für } 0 < x < b \\ \\ - \text{d/16 für } b < x < 2b \end{cases}$$

vorgesehen, d.h. ein Versatz der Teilungsmarkierungen von +d/16 um die äquidistanten Nominallagen mit der Periode 2b.

Es resultiert bei einem derartigen Versatzverlauf eine Phasenverschiebung der zweiten Oberwelle um $\pm\pi/2$ und damit eine Filterung dieses Oberwellen-Signalanteiles .

Ferner zeigt Figur 3a eine Draufsicht auf die entsprechend ausgeführte Abtastteilung (38) mit den erfindungsgemäß versetzten Teilungsmarkierungen.

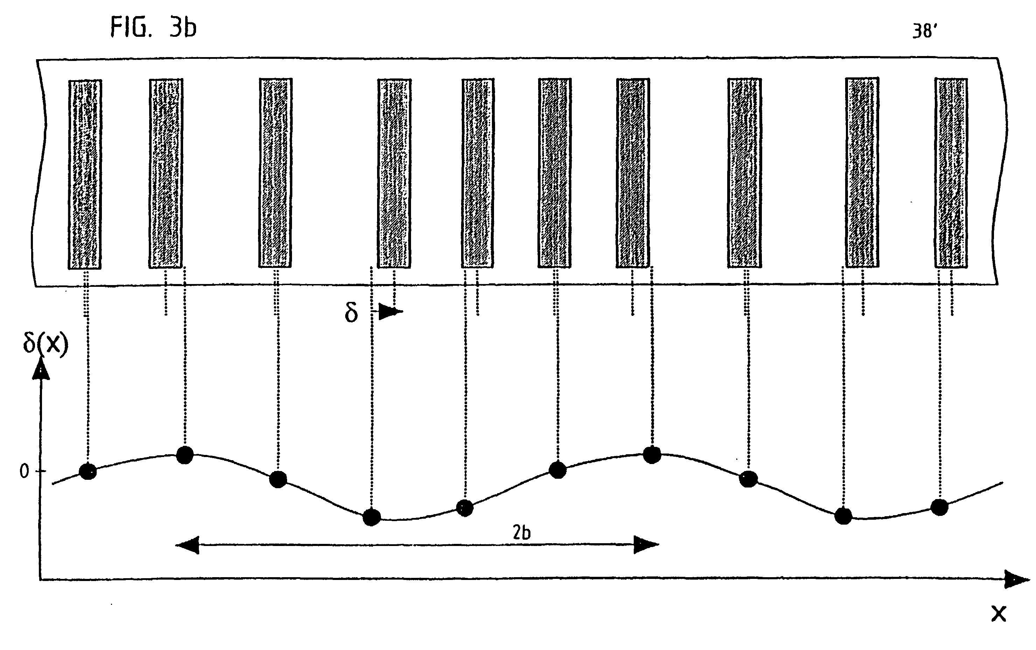

Eine alternative Lösung der oben diskutierten Bedingungsgleichungen für den Versatzverlauf $\delta(x)$ einer zweimal durchlaufenen Abtastteilung ist in der unteren Hälfte der Figur 3b dargestellt. Der Versatzverlauf $\delta(x)$ der Teilungsmarkierungen um die Nominallagen ist in dieser Ausführungsform sinusförmig gemäß der Beziehung

$$\delta(x) = \delta * \sin(\pi * x/b) \tag{7}$$

gewählt. Der Wert für $\delta$ ergibt sich aus der Bestimmungsgleichung $J_0(8*\pi*\delta/d)=0$, wobei $J_0$ eine Besselfunktion 0-ter Ordnung darstellt. Mögliche Lösungen für $\delta$ sind $\delta=d/10{,}451$; $d/4{,}553$; ... .

Im oberen Teil der Figur 3b ist wiederum die entsprechend ausgeführte Abtastteilung (38') mit dem sinusförmigen Versatzverlauf der Teilungsmarkierungen dargestellt.

Analog zum beschriebenen Beispiel für die Filterung der zweiten Oberwelle lassen sich durch eine entsprechende Wahl von $\delta1(x)$ bzw. $\delta2(x)$ auch andere geradzahlige Oberwellenanteile als die zweite Oberwelle aus dem Gesamtsignal herausfiltern. Für den Fall der gewünschten Filterung der n-ten Oberwelle (n=2, 4, 6, ...) bleibt die oben erwähnte Gleichung (5) ebenfalls gültig.

Je nach Meßsystem ist bei der entsprechender Wahl des Versatzverlaufs damit sichergestellt, daß ein bestimmter Oberwellenanteil gefiltert werden kann und der Modulationsgrad der Grundwelle von der Filterung möglichst gering davon beeinflußt wird.

Grundsätzlich ist es auch möglich, die beiden Abtastteilungen (28.1, 28.2) aus Figur 2 als stationäre Maßstabteilungen zu betrachten, gegenüber dem die dazwischen angeordnete, nunmehr als Abtastteilung fungierende Teilung (21) inclusive Lichtquelle (26), Kondensoroptik (27) und den nicht dargestellten Detektorelementen relativ verschoben wird. Entscheidend ist lediglich, daß der entsprechend den obigen Bedingungen gewählte Versatzverlauf auf derjenigen Teilung vorgesehen ist, die zweimal durchlaufen wird. Im letztgenannten Fall wäre demzufolge der Versatzverlauf auf den zwei Maßstabteilungen vorzusehen.

**Patentansprüche**

1. Positionsmesseinrichtung mit einer Maßstabteilung und mindestens einer Abtastteilung, bei der zur Filterung von Oberwellen-Signalanteilen, die bei der Abtastung der Maßstabteilung (1; 21) mittels der mindestens einen Abtastteilung (8; 28.1, 28.2; 38; 38') erzeugt werden, die Teilungsmarkierungen mindestens einer Maßstab- (1; 21) oder Abtastteilung (8; 28.1, 28.2; 38; 38') einen definierten Versatz $\delta1(x)$, $\delta2(x)$; $\delta(x)$ gegenüber äquidistanten Abstandsintervallen aufweisen,
   **dadurch gekennzeichnet, dass**
   der Versatz $\delta1(x)$, $\delta2(x)$; $\delta(x)$ derart gewählt ist, daß die Signalanteile der n-ten geradzahligen Oberwelle, n = 2, 4, 6, ..., aufgrund der resultierenden Phasenverschiebung eliminiert werden, während die Phasenlage für die Signalanteile der Grundwelle konstant und unabhängig vom Abtastort (x) bleibt.

2. Positionsmesseinrichtung nach Anspruch 1, **dadurch gekennzeichnet, dass** der erforderliche Versatzverlauf $\delta1(x)$, $\delta2(x)$ im Fall zweier durchlaufener Abtastteilungen oder Maßstabteilungen den Bedingungen

$$\delta1(x) = \delta1(x+2*b),$$

$$\delta 2(x) = \delta 2(x+2*b)$$

und

$$\delta 1(x) = -\delta 2(x+b)$$

genügt, wobei $b \approx D * \lambda/d$ und D den Abstand der Abtastteilungen (28.1, 28.2) von der Maßstabteilung (21), $\lambda$ die Wellenlänge der Lichtquelle (26) und d die Teilungsperiode der Maßstabteilung bezeichnet.

3. Positionsmesseinrichtung nach Anspruch 1, **dadurch gekennzeichnet. dass** der erforderliche Versatzverlauf $\delta(x)$ im Fall einer zweimal durchlaufenen Abtastteilung oder Maßstabteilung den Bedingungen

$$\delta(x) = \delta(x+2*b)$$

und

$$\delta(x) = -\delta(x+b)$$

genügt,-wobei $b \approx D * \lambda/d$ und D den Abstand der Abtastteilungen von der Maßstabteilung, $\lambda$ die Wellenlänge der Lichtquelle und d die Teilungsperiode der Maßstabteilung bezeichnet.

4. Positionsmesseinrichtung nach Anspruch 2, **dadurch gekennzeichnet, dass** der Versatzverlauf $\delta 1(x)$, $\delta 2(x)$ zur Eliminierung der n-ten Oberwelle der Bedingung

$$\int_{-b}^{+b} e^{i*2n*\pi* (\delta 1(x) + \delta(x))/d}\, dx = 0$$

genügt.

5. Positionsmesseinrichtung nach Anspruch 3, **dadurch gekennzeichnet, dass** der Versatzverlauf $(\delta(x))$ zur Eliminierung der n-ten Oberwelle der Bedingung

$$\int_{-b}^{+b} e^{i*4n*\pi* \delta(x)/d}\, dx = 0$$

genügt.

6. Positionsmesseinrichtung nach Anspruch 5, **dadurch gekennzeichnet, dass** zur Eliminierung der zweiten Oberwelle ein Versatzverlauf

$$\delta(x) = \begin{cases} + d/16 \text{ für } 0 < x < b \\ \\ - d/16 \text{ für } b < x < 2b \end{cases}$$

vorgesehen ist.

**7.** Positionsmesseinrichtung nach Anspruch 5, **dadurch gekennzeichnet, dass** zur Eliminierung der zweiten Oberwelle ein Versatzverlauf

$$\delta(x)= \delta*\sin(\pi*x/b)$$

mit der Nebenbedingung $J_0(8*\pi*\delta/d)=0$ vorgesehen ist.

**8.** Positionsmesseinrichtung nach Anspruch 1, **dadurch gekennzeichnet, dass** sowohl die Maßstab-(1; 21) als auch mindestens eine Abtastteilung (8; 28.1, 28.2) als Phasengitter ausgeführt ist.

**9.** Positionsmesseinrichtung nach mindestens einem der vorangehenden Ansprüche, **dadurch gekennzeichnet, dass** die Positionsmeßeinrichtung als Längen-Meßsystem ausgeführt ist.

**10.** Positionsmesseinrichtung nach mindestens einem der vorangehenden Ansprüche, **dadurch gekennzeichnet, dass** die Positionsmeßeinrichtung als Winkel-Meßsystem ausgeführt ist.


**Claims**

**1.** **Position measuring device having a scale division and at least one scanning division in which, to filter harmonic signal components which are created during the scanning of the scale division (1;21) by means of the at least one scanning division (8; 28.1, 28.2; 38; 38'), the** division marks of at least one scale division (1;21) or scanning division (8; 28.1, 28.2; 38; 38') have a defined shift $\delta 1(x)$, $\delta 2(x)$; $\delta(x)$ with respect to equidistant spacing intervals,
**characterised in that**
the shift $\delta 1(x)$, $\delta 2(x)$, $\delta(x)$ is selected in such a way that the signal components of the n-th even harmonic, n = 2,4,6..., are eliminated by virtue of the resulting phase shift, whilst the phase position for the signal components of the fundamental wave remains constant and independent of the scanning site.

**2.** **Position measuring device** according to claim 1, **characterised in that** the necessary shift course $\delta 1(x)$, $\delta 2(x)$ in the case of two traversed scanning or scale divisions satisfies the conditions:

$$\delta 1(x)= \delta 1(x+2*b),$$

$$\delta 2(x)= \delta 2(x+2*b)$$

and

$$\delta 1(x)= -\delta 2(x+b)$$

wherein $b \approx D * \lambda/d$ and D refers to the spacing of the scanning divisions (28.1, 28.2) from the scale division (21), $\lambda$ is the wave length of the light source (26) and d the division period of the scale division.

**3.** **Position measuring device** according to claim 1, **characterised in that** the necessary shift course $\delta(x)$ in the

case of a scanning or scale division traversed twice satisfies the conditions

$$\delta(x) = \delta(x+2*b)$$

and

$$\delta(x) = -\delta(x+b)$$

wherein $b \approx D * \lambda/d$ and D refers to the spacing of the scanning divisions from the scale division, $\lambda$ is the wave length of the light source and d the division period of the scale division.

4.  **Position measuring device** according to claim 2, **characterised in that** the shift course $\delta1(x)$, $\delta2(x)$ to eliminate the n-th harmonic satisfies the condition

```
+b    i*2n*π*(δ1(x) + δ(x))/d
∫    e                        dx = 0
-b
```

5.  **Position measuring device** according to claim 3, **characterised in that** the shift course ($\delta(x)$) to eliminate the n-th harmonic satisfies the condition

```
+b    i*4n*π*δ(x)/d
∫    e                        dx = 0
-b
```

6.  **Position measuring device** according to claim 5, **characterised in that,** to eliminate the second harmonic, a shift course

$$\delta(x) = \begin{cases} +d/16 \text{ for } 0 < x < b \\ \\ -d/16 \text{ for } b < x < 2b \end{cases}$$

is provided.

7.  **Position measuring device** according to claim 5, **characterised in that**, to eliminate the second harmonic, a shift course

$$\delta(x) = \delta*\sin(\pi*x/b)$$

is provided with the secondary condition $J_0(8*\pi*\delta/d)=0$.

8. **Position measuring device** according to claim 1, **characterised in that** both the scale division (1;21) and at least one scanning division (8; 28.1, 28.2) are realised as phase gratings.

9. **Position measuring device** according to at least one of the preceding claims, **characterised in that** the position measuring device is realised as a length measuring system.

10. **Position measuring device** according to at least one of the preceding claims, **characterised in that** the position measuring device is realised as an angle measuring system.

**Revendications**

1. Dispositif de mesure de position, comportant une graduation de règle et au moins une graduation de palpage, dans lequel, afin de filtrer les harmoniques des signaux produits au cours du palpage de la graduation de règle (1 ; 21) à l'aide de la graduation de palpage (8 ; 28.1, 28.2 ; 38 ; 38') au nombre d'au moins une, les repères de graduation d'au moins une graduation de règle (1 ; 21) ou graduation de palpage (8 ; 28.1, 28.2 ; 38 ; 38') présentent un décalage déterminé $\delta 1(x)$, $\delta 2(x)$, $\delta(x)$ par rapport à des intervalles constants,
   **caractérisé en ce que**
   le décalage $\delta 1(x)$, $\delta 2(x)$; $\delta(x)$ est choisi tel, que les composantes de signaux de la $n^{\text{ième}}$ harmonique paire, n=2, 4, 6,..., soient éliminées par suite du déphasage qui en résulte, tandis que le phasage pour les fractions de signaux de l'onde directe reste constant et indépendant du lieu de palpage (x).

2. Dispositif de mesure de position selon la revendication 1, **caractérisé en ce que** la variation du décalage $\delta 1(x)$, $\delta 2(x)$ nécessaire dans le cas de deux graduations de règle ou graduations de palpage parcourues satisfait les conditions

$$\delta 1(x) = \delta 1(x + 2 * b),$$

$$\delta 2(x) = \delta 2(x + 2 * b)$$

   et

$$\delta 1(x) = \delta 2(x + b)$$

   avec b = D $*$ $\lambda$/d, et D étant la distance des graduations de palpage (28.1, 28.2) par rapport à la graduation de règle (21), $\lambda$ la longueur d'onde de la source lumineuse (26) et d la période de division de la graduation de règle.

3. Dispositif de mesure de position selon la revendication 1, **caractérisé en ce que** la variation du décalage $\delta(x)$ nécessaire dans le cas d'une graduation de règle ou graduation de palpage parcourue deux fois satisfait les conditions

$$\delta 1(x) = \delta(x + 2 * b)$$

   et

$$\delta(x) = -\delta(x + b)$$

   avec b = D $*$ $\lambda$/d, et D étant la distance des graduations de palpage par rapport à la graduation de règle, $\lambda$ la longueur d'onde de la source lumineuse (26) et d la période de division de la graduation de règle.

4. Dispositif de mesure de position selon la revendication 2, **caractérisé en ce que** la variation du décalage $\delta 1(x)$, $\delta 2(x)$ pour éliminer la $n^{\text{ième}}$ harmonique satisfait la condition

$$\int_{-b}^{+b} e^{\,i*2n*\pi*(\delta(x))/d}\, dx = 0$$

5. Dispositif de mesure de position selon la revendication 3, **caractérisé en ce que** la variation du décalage ($\delta(x)$) pour éliminer la $n^{\text{ième}}$ harmonique satisfait la condition

$$\int_{-b}^{+b} e^{\,i*4n*\pi*(\delta(x))/d}\, dx = 0$$

6. Dispositif de mesure de position selon la revendication 5, **caractérisé en ce que** pour éliminer la deuxième harmonique, il est prévu une variation du décalage

$$\delta(x) = \begin{cases} +d/16 & \text{pour } 0<x<b \\ -d/16 & \text{pour } b<x<2b \end{cases}$$

7. Dispositif de mesure de position selon la revendication 5, **caractérisé en ce que** la variation du décalage ($\delta(x)$) pour éliminer la deuxième harmonique, il est prévu une variation du décalage

$$\delta(x) = \delta * \sin(\pi * x/b)$$

avec la condition secondaire $J_0(8*\pi*\delta/d)=0$.

8. Dispositif de mesure de position selon la revendication 1, **caractérisé en ce que** la graduation de règle (1 ; 21) et au moins une graduation de palpage (8 ; 28.1, 28.2) sont conformées en réseaux de phase.

9. Dispositif de mesure de position selon au moins une des revendications précédentes, **caractérisé en ce que** le dispositif de mesure de position est conformé en dispositif de mesure de longueurs.

10. Dispositif de mesure de position selon au moins une des revendications précédentes, **caractérisé en ce que** le dispositif de mesure de position est conformé en dispositif de mesure d'angles.

FIG. 1

FIG. 2

EP 0 763 715 B1

FIG. 3a

EP 0 763 715 B1

FIG. 3b

38'

$\delta(x)$

$\delta$

0

2b

x

EP 0 763 715 B1